# DEMANDE DE BREVET EUROPEEN

(11) **EP 4 169 706 A1**
(43) Date de publication de la demande: **26.04.2023**
(21) Numéro de dépôt: 22199442.9
(22) Date de dépôt: 03.10.2022
(51) Int. Cl.: B32B 3/12, B32B 3/26, B32B 5/02, B32B 7/12, B32B 15/02, B32B 15/08, B32B 15/14, B32B 27/08, B32B 27/12, B32B 27/28

(54) **ÉLÉMENT DE PEAU RÉSISTIVE POUR PANNEAU ACOUSTIQUE DESTINÉ À UN AÉRONEF**

(30) Priorité: 25.10.2021 FR 2111314
(71) Demandeur: Airbus Operations SAS, 31060 Toulouse (FR)
(72) Inventeur: RAVISE, Florian, 31060 TOULOUSE (FR); PRZYBYLA, Benoit, 31060 TOULOUSE (FR)
(74) Mandataire: Gevers & Orès

(57) **Abrégé**

- Élément de peau résistive pour panneau acoustique destiné à un aéronef.
- L'élément de peau résistive comporte une nappe (N1), une nappe (N2) à ouvertures et une toile tissée (6) disposée en sandwich entre les deux nappes (N1, N2). La nappe (N1) comprend au moins une couche en C/PEAK (2) et une pellicule en PEI (3). La nappe (N2) comporte au moins une couche en PEI (5). La nappe (N1) est traversée de perforations (7). La nappe (N2) présente des ouvertures (8) configurées pour que la nappe (N2) ne bouche pas les perforations (7) de la nappe (N1). La toile tissée (6) donne la possibilité de réaliser des perforations (7) de grandes tailles tout en conversant de bonnes propriétés acoustiques.

## Description

### DOMAINE TECHNIQUE

La présente invention concerne un élément de peau résistive pour panneau acoustique destiné à un aéronef, en particulier un avion de transport.

### ÉTAT DE LA TECHNIQUE

On sait que sur un aéronef, par exemple sur un avion de transport, des bruits importants sont souvent générés, notamment par les ensembles propulsifs ou réacteurs de l'aéronef. Il est connu, pour réduire l'effet sonore produit par les réacteurs de l'aéronef, de prévoir, en particulier au niveau des nacelles des réacteurs, des parois pourvues de panneaux présentant une bonne absorption acoustique. De façon usuelle, un panneau d'atténuation acoustique, dit panneau acoustique ci-après, comprend généralement une structure acoustique. Cette structure acoustique comporte souvent, une structure alvéolaire, en particulier en nid d'abeilles, et est munie sur ses deux faces, respectivement, d'une peau acoustique dite également peau résistive ou couche résistive (« resistive skin » en anglais) perforée et d'une peau arrière ou couche arrière non perforée (« backing skin » en anglais). Le panneau acoustique est agencé pour que la peau acoustique soit située à proximité de la source de bruit, notamment en amont et/ou en aval de la soufflante (« fan » en anglais) dans le cas d'un réacteur d'aéronef, pour réaliser une absorption efficace du bruit généré en amont et aval de la soufflante.

En général, la peau résistive est thermoformée avant d'être perforée pour satisfaire aux exigences acoustiques. Pour satisfaire aux exigences aérodynamiques, afin d'avoir une traînée minimale, la taille des perforations à réaliser est généralement comprise entre 0,4 mm et 1 mm, de préférence inférieure à 0,5 mm. Cette taille de perforations peut être un problème à l'échelle industrielle à cause du nombre de perforations à réaliser et de la cadence de perçage. Cela peut avoir une influence sur la qualité des perforations.

### EXPOSÉ DE L'INVENTION

La présente invention a pour objet de remédier à cet inconvénient. Pour cela, elle concerne un élément de peau résistive pour panneau acoustique destiné à un aéronef, en particulier un avion de transport, qui pallie cet inconvénient.

Selon l'invention, l'élément de peau résistive comporte :
une première nappe comprenant au moins :
   ∘ une couche en C/PEAK,
   ∘ une première pellicule en PEI déposée sur une première face de la couche en C/PEAK ;
      - une deuxième nappe à ouvertures comportant au moins une première couche en PEI ;
      - une toile tissée disposée en sandwich entre la première nappe et la deuxième nappe de façon que la première pellicule en PEI de la première nappe fasse face
   à la toile tissée ;
   la première nappe étant traversée de perforations,
   la deuxième nappe présentant des ouvertures configurées pour que la deuxième nappe ne bouche pas les perforations de la première nappe.

Ainsi, grâce à la toile tissée, il est possible de réaliser des perforations de tailles supérieures à celle de l'art antérieur afin de retrouver une faible trainée similaire à celle obtenue avec des perforations de taille plus petite, tout en obtenant une perméabilité acoustique et une exigence mécanique souhaitée.

Selon un mode de réalisation, la première nappe comprend une deuxième pellicule en PEI déposée sur une deuxième face de la couche en C/PEAK.

Selon un autre mode de réalisation, la première couche en PEI de la deuxième nappe correspond à une première pellicule en PEI, la deuxième nappe comprend en outre une couche en C/PEAK présentant une première face sur laquelle est déposée la première pellicule en PEI de la deuxième nappe de façon que la première pellicule en PEI de la deuxième nappe fasse face à la toile tissée.

Selon un autre mode de réalisation, la deuxième nappe comprend en outre une deuxième pellicule en PEI déposée sur une deuxième face de la couche en C/PEAK de la deuxième nappe.

Selon un autre mode de réalisation, la première couche en PEI de la deuxième nappe correspond à une couche en C/PEI.

Selon un autre mode de réalisation, la première couche en PEI de la deuxième nappe correspond à une première pellicule en PEI, la deuxième nappe comprenant en outre une couche en C/PEI et une deuxième pellicule en PEI, la couche en C/PEI étant prise en sandwich entre la première pellicule en PEI et la deuxième pellicule en PEI.

L'invention concerne également un panneau acoustique destiné à un aéronef. Selon l'invention, le panneau acoustique comprend :
- au moins un élément de peaux résistive telle que spécifié ci-dessus, le ou les éléments de peau résistive étant assemblés pour former un ensemble d'éléments de peau résistive,
- une bande déposée sur la deuxième nappe,
- une couche d'adhésif déposée sur la bande,
- une couche en nid-d'abeilles déposé sur la couche d'adhésif.

L'invention concerne également un dispositif propulsif pour aéronef.

Selon l'invention, le dispositif propulsif comprend au moins un panneau acoustique tel que spécifié ci-dessus.

L'invention concerne aussi un aéronef comportant au moins un panneau acoustique tel que spécifié ci-dessus.

L'invention concerne aussi un procédé de fabrication d'un élément de peau résistive pour panneau acoustique destiné à un aéronef.

Selon l'invention, le procédé comprend une première série d'étapes pour former une première nappe, la première série d'étapes comprenant au moins :
- une première étape d'approvisionnement d'une couche en C/PEAK non consolidée,
- une étape de dépôt d'une première pellicule en PEI sur une première face de la couche en C/PEAK,
- une étape de consolidation et de conformation de la couche en C/PEAK,
- une étape de perforation de la première nappe consistant à créer des perforations à travers la première nappe ;
le procédé comprenant en outre une deuxième série d'étapes pour former une deuxième nappe, la deuxième série d'étapes comprenant au moins :
- une étape d'approvisionnement d'une première couche en PEI non consolidée, la première couche en PEI comportant des ouvertures ;
le procédé comprenant en outre une troisième série d'étapes pour former l'élément de peau résistive, la troisième série d'étapes comprenant au moins :
- une étape d'approvisionnement d'une toile tissée,
- une étape de dépôt d'une première face de la toile tissée sur la première couche en PEI de la première nappe,
- une étape de dépôt de la deuxième nappe sur une deuxième face de la toile tissée,
- une étape de consolidation d'un ensemble comprenant la première nappe, la deuxième nappe et la toile tissée.

Selon un mode de réalisation, la première série d'étapes comprend en outre :
- une étape de dépôt d'une deuxième pellicule en PEI sur une deuxième face de la couche en C/PEAK, ladite étape de dépôt précédant au moins l'étape de consolidation et de conformation et l'étape de perforation.

Selon un autre mode de réalisation, la deuxième série d'étapes comprend en outre :
- une étape d'approvisionnement d'une couche en C/PEAK,
- une étape de dépôt de la première couche en PEI sur une première face de la couche en C/PEAK, la première couche en PEI de la deuxième nappe correspondant à une première pellicule en PEI,
- une étape de dépôt de l'ensemble comprenant la couche en C/PEAK et la première pellicule en PEI sur la toile tissée de façon que la première pellicule en PEI de la deuxième nappe fasse face à la toile tissée.

Selon un autre mode de réalisation, la deuxième série d'étape comprend en outre :
- une étape de dépôt d'une deuxième pellicule en PEI sur une deuxième face de la couche en C/PEAK de la deuxième nappe.

Selon un autre mode de réalisation, la première couche en PEI de la deuxième nappe correspond à une couche en C/PEI.

Selon un autre mode de réalisation, la deuxième série d'étapes comprend en outre :
- une étape d'approvisionnement d'une couche en C/PEI,
- une étape de dépôt de la première couche en PEI sur une première face de la couche en C/PEI, la première couche en PEI correspondant à une première pellicule en PEI,
- une étape de dépôt d'une deuxième pellicule en PEI sur une deuxième face de la couche en C/PEI.

### BRÈVE DESCRIPTION DES FIGURES

Les figures annexées feront bien comprendre comment l'invention peut être réalisée. Sur ces figures, des références identiques désignent des éléments semblables.
La figure 1 représente schématiquement une coupe transversale en éclaté d'un mode de réalisation de l'élément de peau résistive.
La figure 2 représente schématiquement un mode de réalisation de la première nappe.
La figure 3 représente schématiquement une coupe transversale en éclaté d'un autre mode de réalisation de l'élément de peau résistive.
La figure 4 représente schématiquement une coupe transversale en éclaté d'un autre mode de réalisation de l'élément de peau résistive.
La figure 5 représente schématiquement une coupe transversale en éclaté d'un autre mode de réalisation de l'élément de peau résistive.
La figure 6 représente schématiquement une coupe transversale en éclaté d'un autre mode de réalisation de l'élément de peau résistive.
La figure 7 représente schématiquement une coupe transversale en éclaté d'un autre mode de réalisation de l'élément de peau résistive.
La figure 8 représente une vue en perspective d'un mode de réalisation de l'élément de peau résistive.
La figure 9 représente une vue de dessus d'une portion d'un mode de réalisation de l'élément de peau résistive.
La figure 10a et la figure 10b représentent respectivement une vue en perspective d'un élément de peau résistive conformé et une vue en perspective d'une peau résistive comprenant une pluralité d'éléments de peau résistives assemblés.
La figure 11 représente schématiquement une coupe transversale d'une portion de panneau acoustique.
La figure 12 représente synoptiquement le procédé de fabrication d'un élément de peau résistive selon un mode de réalisation.
La figure 13 représente synoptiquement un mode de réalisation de la première série d'étapes pour former la première nappe du procédé de fabrication d'un élément de peau résistive.
La figure 14 représente synoptiquement un mode de réalisation de la deuxième série d'étapes pour former la deuxième nappe du procédé de fabrication d'un élément de peau résistive.
La figure 15 représente synoptiquement un mode de réalisation de la deuxième série d'étapes pour former la deuxième nappe du procédé de fabrication d'un élément de peau résistive.
La figure 16 représente synoptiquement un mode de réalisation du procédé de fabrication d'un panneau acoustique.

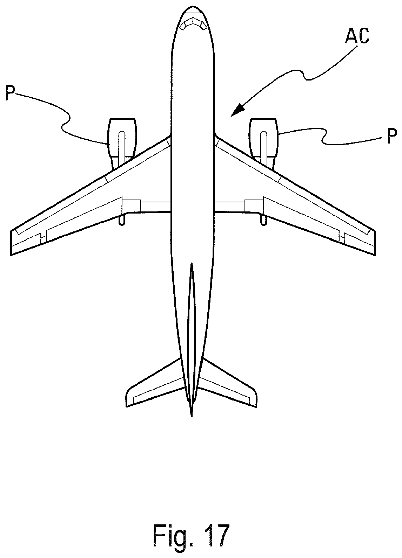

La figure 17 représente une vue de dessus d'un aéronef comportant un système propulsif comprenant des panneaux acoustiques munis d'éléments de peau acoustiques.

### DESCRIPTION DÉTAILLÉE

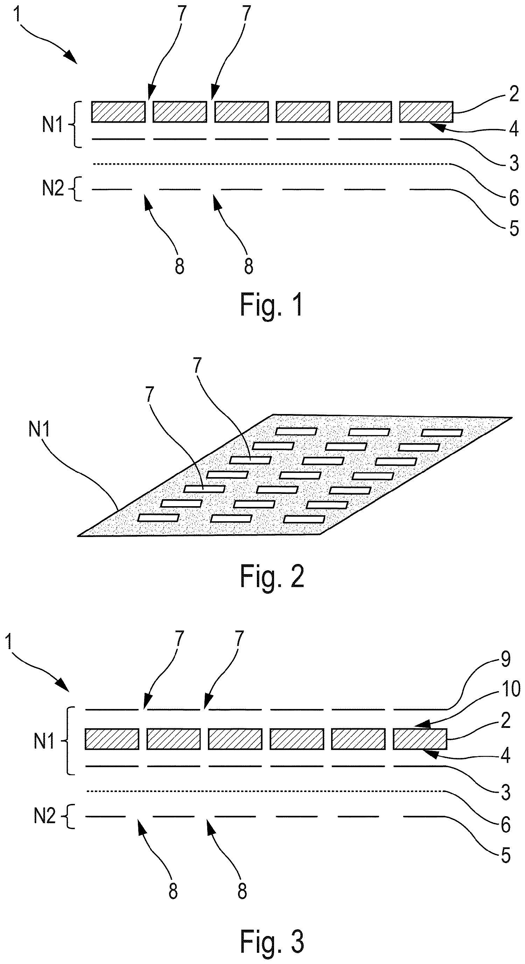

La figure 1 ainsi que la figure 3 à la figure 7 représentent plusieurs modes de réalisation d'un élément de peau résistive 1 pour panneau acoustique 21 destiné à un aéronef AC.

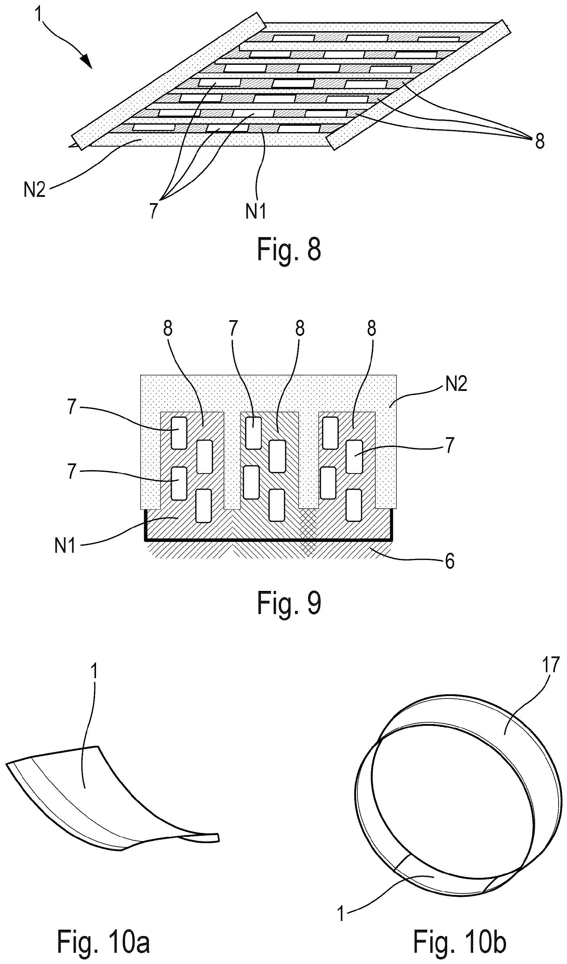

Un panneau acoustique 21 pour un dispositif propulsif P est usuellement d'une forme générale tronconique. La peau résistive 17 présente également une forme générale tronconique comme représenté sur la figure 10b. L'élément de peau résistive 1 peut donc présenter une forme de secteur d'un tronc de cône comme représenté sur la figure 10a.

L'élément de peau résistive 1 comprend deux matériaux thermoplastiques présentant une température de fusion différente, notamment d'une résine de la famille des polyaryléthercétones renforcée de fibres de carbone et d'une résine de polyétherimide renforcée ou non de fibres de carbone. La famille des polyaryléthercétones comprend la résine de polyétheréthercétone PEEK (pour « PolyEtherEtherKetone » en anglais), la résine de polyéthercétonecétone PEKK (pour « PolyEtherKetoneKetone » en anglais), etc. Les fibres de carbone peuvent être remplacées par des fibres de verre ou un mélange de fibres de carbone et de fibres de verre. Dans la suite de la description, on parle seulement de fibres de carbone, mais on comprend que ces fibres de carbone peuvent donc être remplacées par des fibres de verre ou un mélange de fibres de carbone et de fibres de verre.

Dans la suite de la description, la résine de la famille des polyaryléthercétones renforcée de fibres de carbone et la résine de polyétherimide renforcée de fibres de carbone seront appelées C/PEAK et C/PEI, respectivement.

De même, la résine de la famille des polyaryléthercétones et la résine de polyétherimide seront appelées PEAK et PEI, respectivement.

Le PEI est miscible dans le PEAK à une température de consolidation comprise entre 290°C et 300°C. La fusion du PEAK se produit à une température de 342°C avec une température de consolidation comprise entre 390°C et 400°C. L'élément de peau résistive 1 comporte une nappe N1, une nappe N2 et une toile tissée 6 (« wiremesh » en anglais).

Comme représenté sur la figure 1, la nappe N1 comprend au moins une couche en C/PEAK 2 et une pellicule en PEI 3 déposée sur une face 4 de la couche en C/PEAK 2. La nappe N1 est traversée de perforations 7. La taille des perforations 7 dépendent d'une perméabilité acoustique souhaitée pour le panneau acoustique 21 et/ou de performances mécaniques souhaitées. La figure 2 représente un exemple de nappe N1 comportant des perforations 7. Dans cet exemple, les perforations 7 présentent une forme rectangulaire.

La nappe N2 correspond à une nappe N2 à ouvertures comportant au moins une couche en PEI 5. La nappe N2 à ouvertures présente des ouvertures 8 configurées pour que la nappe N2 ne bouche pas les perforations 7 de la nappe N1. La figure 8 représente une nappe N2 disposée sur une nappe N1. Les ouvertures 8 de la nappe N2 peuvent correspondre à des ouvertures allongées sur toute une largeur ou une longueur de la nappe N2. La nappe N2 peut ainsi correspondre à une grille comme représenté sur la figure 8. La figure 9 représentant un détail de la nappe N2 disposée sur la nappe N1. Sur cette figure 9, on voit que les perforations 7 de la nappe N1 ne sont pas bouchées par la nappe N2. Chacune des perforations 7 de la nappe N1 débouche complètement sur une ouverture 8 de la nappe N2. Autrement dit, aucune partie pleine de la nappe N2 ne fait obstacle aux perforations 7 de la nappe N1 au droit de chacune de ces perforations 7. Cela permet à l'élément de peau résistive 1 d'obtenir la perméabilité acoustique souhaitée pour le panneau acoustique 21 et/ou les performances mécaniques souhaitées pour le panneau acoustique 21. Un recouvrement, même partiel, de ces perforations 7 par les parties pleines de la nappe N2 peut détériorer ladite perméabilité acoustique souhaitée et/ou lesdites performances mécaniques souhaitées.

La toile tissée 6 est disposée en sandwich entre la nappe N1 et la nappe N2 de façon que la pellicule en PEI 3 de la nappe N1 fasse face à la toile tissée 6.

La toile tissée 6 peut comprendre plusieurs pièces tissées (ou patches tissés) afin de faciliter la mise en place de la toile tissée 6 sur la nappe N1 lorsque ladite nappe N1 est consolidée. L'ensemble des pièces tissées forme alors la toile tissée 6. Les pièces tissées peuvent être jointes bord à bord ou par superposition des bords dans des zones de jonction. Afin de former la toile tissée 6, les zones de jonction entre les pièces tissées sont prises en sandwich entre la nappe N1 et la nappe N2 de façon que les perforations 7 de la nappe N1 et les ouvertures 8 de la nappe N2 ne soient pas au droit desdites zones de jonction de la toile tissée 6.

La toile tissée 6 peut être fabriquée en métal. La toile tissée 6 peut aussi être fabriquée en polymère. À titre d'exemple, la toile tissée 6 peut être fabriqué en PEEK. De préférence, le polymère présente une température de fusion supérieure à celle du C/PEI.

Selon un mode de réalisation représenté sur la figure 3, la nappe N1 comprend une pellicule en PEI 9 déposée sur une face 10 de la couche en C/PEAK 2, opposée à la face 4.

Selon un mode de réalisation représenté sur la figure, 4 la couche en PEI 5 de la nappe N2 correspond à une pellicule en PEI. La nappe N2 comprend alors en outre une couche en C/PEAK 11 présentant une face 12 sur laquelle est déposée ladite pellicule en PEI 5 de la nappe N2 de façon que la pellicule en PEI 5 de la nappe N2 fasse face à la toile tissée 6.

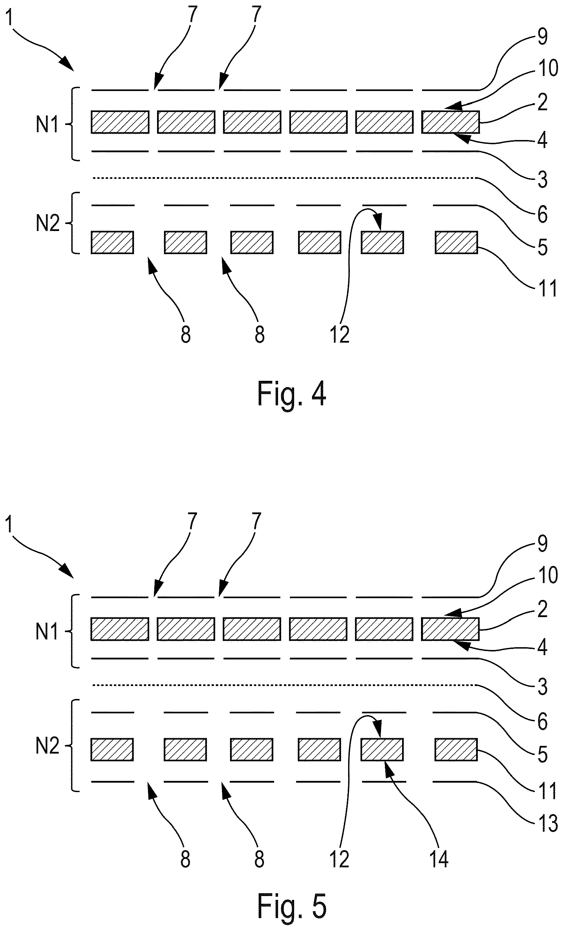

Selon un mode de réalisation représenté sur la figure 5, la nappe N2 comprend en outre une pellicule en PEI 13 déposée sur une face 14 de la couche en C/PEAK 11 de la nappe N2, opposée à la face 12.

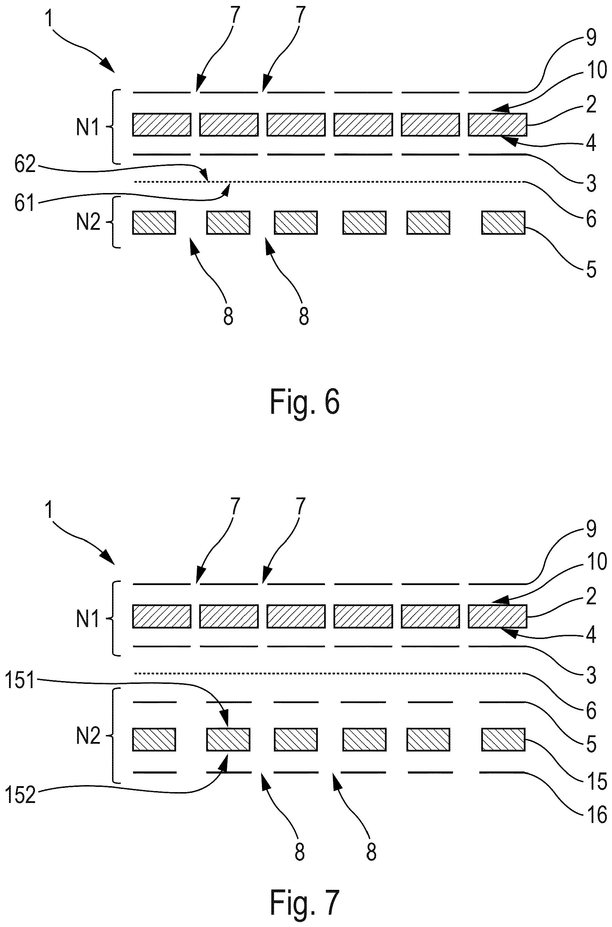

Selon un mode de réalisation représenté sur la figure 6, la couche en PEI 5 de la nappe N2 est renforcée de fibres de carbone. Dans ce mode de réalisation, la couche en PEI 5 correspond donc à une couche en C/PEI.

Selon un mode de réalisation préféré représenté sur la figure 7, la couche en PEI 5 de la nappe N2 correspond à une pellicule en PEI. La nappe N2 comprend alors en outre une couche en C/PEI 15 et une pellicule en PEI 16. La couche en PEI 5 est prise en sandwich entre la pellicule en PEI 5 et la pellicule en PEI 16. La couche en PEI 16 autorise une adhérence d'un matériau thermodurcissable, telle que la bande 18 qui est exposée ci-après.

La pellicule en PEI 5 de la nappe N2 permet un bon assemblage avec la nappe N1 comprenant la couche de C/PEAK 2 au moment de la consolidation.

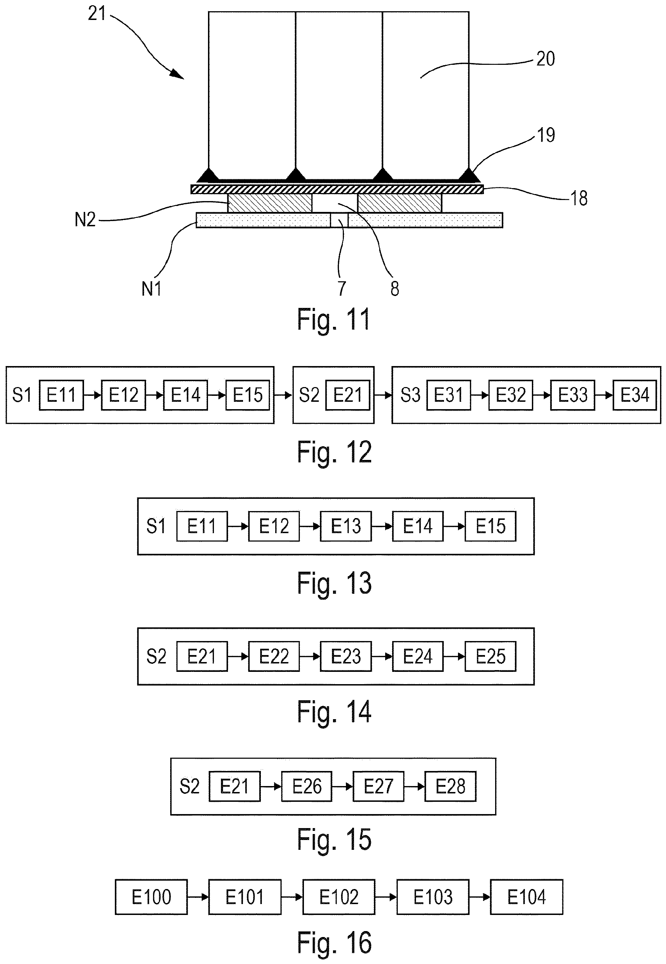

L'invention concerne également un panneau acoustique 21 destiné à un aéronef AC. La figure 11 représente une portion d'un panneau acoustique 21.

Le panneau acoustique 21 comprend au moins un élément de peaux résistive 1 selon l'invention. Le ou les éléments de peau résistive 1 sont assemblés pour former la peau résistive 17 du panneau acoustique 21.

Le panneau acoustique comprend en outre une bande 18 déposée sur la nappe N2, une couche d'adhésif 19 déposée sur la bande 18 et une couche en nid-d'abeilles 20 déposé sur la couche d'adhésif 19. La bande 18 est déposée sur les parties de la nappe N2 sans boucher les ouvertures 8 de la nappe N2.

La bande 18 peut être fabriquée en matériau thermodurcissable.

De façon non limitative, les pellicules en PEI 3, 9, 13 et 16 présentent une épaisseur comprise dans une plage entre 25 µm et 150 µm, de préférence dans une plage entre 80 µm et 100 µm, avantageusement égale à 90 µm. De même, dans les modes de réalisation (figures 4 et 7) où la couche en PEI 5 correspond à une pellicule en PEI, la pellicule en PEI 5 présente une épaisseur comprise dans une plage entre 25 µm et 150 µm, de préférence dans une plage entre 80 µm et 100 µm, avantageusement égale à 90 µm.

L'invention concerne aussi un dispositif propulsif P pour aéronef AC. Le dispositif propulsif P comprend au moins un panneau acoustique 21 selon l'invention. L'invention concerne aussi un aéronef AC comportant au moins un panneau acoustique 21 selon l'invention.

L'invention concerne aussi un procédé de fabrication de l'élément de peau résistive 1 pour panneau acoustique 21 destiné à un aéronef AC.

Comme représenté sur la figure 12 et sur la figure 1, le procédé comprend une série d'étapes S1 pour former la nappe N1, une série d'étapes S2 pour former la nappe N2 et une série d'étapes S3 pour former l'élément de peau résistive 1.

La série d'étapes S1 comprend au moins :
- une étape E11 d'approvisionnement de la couche en C/PEAK 2 non consolidée,
- une étape E12 de dépôt de la pellicule en PEI 3 sur la face 4 de la couche en C/PEAK 2,
- une étape E14 de consolidation et de conformation de la couche en C/PEAK 2,
- une étape E15 de perforation de la nappe N1 consistant à créer des perforations 7 à travers la nappe N1.

Les perforations 7 présentent une taille qui dépend d'une perméabilité acoustique souhaitée du panneau acoustique 21 et/ou de performances mécaniques souhaitées.

L'étape E14 de consolidation et de conformation peut être réalisée, par exemple sous presse, à une température comprise entre 390°C et 400°C. La consolidation peut comprendre un colaminage en plus de la consolidation.

La nappe N1 comprenant la couche en C/PEAK est donc préformée, consolider et perforée en avance de phase. Ces trois opérations peuvent être réalisées parallèle, ce qui génère un gain de temps dans la fabrication de l'élément de peau résistive 1.

La série d'étapes S2 comprend au moins une étape E21 d'approvisionnement de la couche en PEI 5 non consolidée. La couche en PEI 5 comporte des ouvertures 8. La série d'étapes S3 comprenant au moins :
- une étape E31 d'approvisionnement de la toile tissée 6,
- une étape E32 de dépôt de la face 62 de la toile tissée 6 sur la pellicule en PEI 3 de la nappe N1,
- une étape E33 de dépôt de la nappe N2 sur la face 61 de la toile tissée 6,
- une étape E34 de consolidation d'un ensemble comprenant la nappe N1, la nappe N2 et la toile tissée 6.

L'étape E32 de dépôt permet de conformer toile tissée 6 sur la nappe N1 qui est déjà consolidée. Cela permet de faciliter le dépôt de la toile tissée 6 en vue de son encapsulation entre la nappe N1 et la nappe N2.

La consolidation peut comprendre un colaminage en plus de la consolidation. L'étape E34 de consolidation peut être réalisée, par exemple sous presse, à une température comprise entre 290°C et 300°C pour permettre une co-consolidation entre la nappe N1 et la nappe N2. Une pression comprise entre 1 bar et 100 bar peut être exercée pour obtenir une qualité suffisante de l'élément de peau résistive 1. La toile tissée 6 se trouve ainsi encapsulée entre la nappe N1 et la nappe N2 après la consolidation de l'étape E34 de consolidation. La température de fusion du PEAK étant supérieure à la température de fusion du PEI, la consolidation à une température comprise entre 290°C et 300°C n'affecte pas la nappe N1 qui est déjà consolidée. Ainsi, cela permet de maintenir une forme géométrique qui assure les propriétés acoustiques souhaitées de l'élément de peau résistive 1, car la nappe N1 comprenant la couche en C/PEAK n'est pas déconsolidée par l'étape E34 de consolidation. Grâce à l'utilisation du C/PEAK, la couche en C/PEAK ne migre pas vers les perforations 7 déjà réalisées. En outre, il n'y a pas non plus déformation de la nappe N1, ni de dégradation de la matière en laquelle la nappe N1 est fabriquée. Comme représenté sur la figure 13 pour le mode de réalisation représenté sur la figure 3, la série d'étapes S1 comprend en outre une étape E13 de dépôt de la pellicule en PEI 9 sur la face 10 de la couche en C/PEAK 2. Cette étape E13 de dépôt précède au moins l'étape E14 de consolidation et de conformation et l'étape E15 de perforation.

Comme représenté sur la figure 14 pour le mode de réalisation représenté sur la figure 4, la série d'étapes S2 comprend en outre :
- une étape E22 d'approvisionnement de la couche en C/PEAK 11,
- une étape E23 de dépôt de la couche en PEI 5 sur la face 12 de la couche en C/PEAK 11, la couche en PEI 5 de la nappe N2 correspondant à une pellicule en PEI,
- une étape E24 de dépôt de l'ensemble comprenant la couche en C/PEAK 11 et la pellicule en PEI 5 sur la toile tissée 6 de façon que la pellicule en PEI 5 de la nappe N2 fasse face à la toile tissée 6.

Comme représenté sur la figure 14 pour le mode de réalisation représenté sur la figure 5, la série d'étape S2 comprend en outre une étape E25 de dépôt de la pellicule en PEI 13 sur la face 14 de la couche en C/PEAK 11 de la nappe N2. Comme représenté sur la figure 6, la couche en PEI 5 de la nappe N2 peut correspondre à une couche en C/PEI.

Comme représenté sur la figure 15 pour le mode de réalisation représenté sur la figure 7, la série d'étapes S2 comprend en outre :
- une étape E26 d'approvisionnement de la couche en C/PEI 15,
- une étape E27 de dépôt de la couche en PEI 5 sur la face 151 de la couche en C/PEI 15, la couche en PEI 5 correspondant à une pellicule en PEI,
- une étape E28 de dépôt de la pellicule en PEI 16 sur la face 152 de la couche en C/PEI 15.

La nappe N2 peut être réalisée préalablement par un procédé d'injection ou par un procédé de moulage à la main ou au contact (« hand lay-up molding » en anglais) avant d'être déposée sur la toile tissée 6. Elle peut être aussi réalisée par surjection directement sur la toile tissée 6 avec le PEI ou le C/PEI afin de conformer la nappe N2 directement sur la nappe N1 déjà consolidée.

L'invention concerne également un procédé de fabrication d'un panneau acoustique 21 destiné à un aéronef AC.

Comme représenté sur la figure 16, le procédé comporte les étapes suivantes :
- une étape E100 d'assemblage d'une pluralité d'éléments de peau résistive 1 fabriquées selon l'invention,
- une étape E101 de dépôt d'au moins une bande 18 sur la nappe N2,
- une étape E102 de dépôt d'une couche d'adhésif 19 sur la bande 18,
- une étape E103 de dépôt d'une couche en nid-d'abeilles 20 sur la couche d'adhésif 19,
- une étape E104 de réticulation de la couche d'adhésif 19.

## Revendications

1. Élément de peau résistive pour panneau acoustique destiné à un aéronef, **caractérisé en ce qu'**il comporte :
- une première nappe (N1) comprenant au moins :
∘ une couche en C/PEAK (2),
∘ une première pellicule en PEI (3) déposée sur une première face (4) de la couche en C/PEAK (2) ;
- une deuxième nappe (N2) à ouvertures comportant au moins une première couche en PEI (5) ;
- une toile tissée (6) disposée en sandwich entre la première nappe (N1) et la deuxième nappe (N2) de façon que la première pellicule en PEI (3) de la première nappe (N1) fasse face à la toile tissée (6) ;
la première nappe (N1) étant traversée de perforations (7),
la deuxième nappe (N2) présentant des ouvertures (8) configurées pour que la deuxième nappe (N2) ne bouche pas les perforations (7) de la première nappe (N1).

2. Élément de peau résistive selon la revendication 1,
**caractérisé en ce que** la première nappe (N1) comprend une deuxième pellicule en PEI (9) déposée sur une deuxième face (10) de la couche en C/PEAK (2).

3. Élément de peau résistive selon l'une quelconque des revendications 1 et 2, **caractérisé en ce que** la première couche en PEI (5) de la deuxième nappe (N2) correspond à une première pellicule en PEI, la deuxième nappe (N2) comprend en outre une couche en C/PEAK (11) présentant une première face (12) sur laquelle est déposée la première pellicule en PEI (5) de la deuxième nappe (N2) de façon que la première pellicule en PEI (5) de la deuxième nappe (N2) fasse face à la toile tissée (6).

4. Élément de peau résistive selon l'une quelconque des revendications 1 à 3, **caractérisé en ce que** la deuxième nappe (N2) comprend en outre une deuxième pellicule en PEI (13) déposée sur une deuxième face (14) de la couche en C/PEAK (11) de la deuxième nappe (N2).

5. Élément de peau résistive selon l'une quelconque des revendications 1 et 2, **caractérisé en ce que** la première couche en PEI (5) de la deuxième nappe (N2) correspond à une couche en C/PEI.

6. Élément de peau résistive selon l'une quelconque des revendications 1 et 2, **caractérisé en ce que** la première couche en PEI (5) de la deuxième nappe (N2) correspond à une première pellicule en PEI, la deuxième nappe (N2) comprenant en outre une couche en C/PEI (15) et une deuxième pellicule en PEI (16), la couche en C/PEI (5) étant prise en sandwich entre la première pellicule en PEI (5) et la deuxième pellicule en PEI (16).

7. Panneau acoustique destiné à un aéronef,
**caractérisé en ce qu'**il comprend :
- au moins un élément de peaux résistive (1) selon l'une quelconque des revendications 1 à 6, le ou les éléments de peau résistive étant assemblés pour former un ensemble (17) d'éléments de peau résistive (1),
- une bande (18) déposée sur la deuxième nappe (N2),
- une couche d'adhésif (19) déposée sur la bande (18),
- une couche en nid-d'abeilles (20) déposé sur la couche d'adhésif (19).

8. Dispositif propulsif pour aéronef,
**caractérisé en ce qu'**il comprend au moins un panneau acoustique selon la revendication 7.

9. Aéronef,
**caractérisé en ce qu'**il comporte au moins un panneau acoustique selon la revendication 7.

10. Procédé de fabrication d'un élément de peau résistive pour panneau acoustique destiné à un aéronef,
**caractérisé en ce qu'**il comprend une première série d'étapes (S1) pour former une première nappe (N1), la première série d'étapes (S1) comprenant au moins :
- une première étape (E11) d'approvisionnement d'une couche en C/PEAK (2) non consolidée,
- une étape (E12) de dépôt d'une première pellicule en PEI (3) sur une première face (4) de la couche en C/PEAK (2),
- une étape (E14) de consolidation et de conformation de la couche en C/PEAK (2),
- une étape (E15) de perforation de la première nappe (N1) consistant à créer des perforations (7) à travers la première nappe (N1) ;
le procédé comprenant en outre une deuxième série d'étapes (S2) pour former une deuxième nappe (N2), la deuxième série d'étapes (S2) comprenant au moins :
- une étape (E21) d'approvisionnement d'une première couche en PEI (5) non consolidée, la première couche en PEI (5) comportant des ouvertures (8) ;
le procédé comprenant en outre une troisième série d'étapes (S3) pour former l'élément de peau résistive (1), la troisième série d'étapes (S3) comprenant au moins :
- une étape (E31) d'approvisionnement d'une toile tissée (6),
- une étape (E32) de dépôt d'une première face (62) de la toile tissée (6) sur la première couche en PEI (5) de la première nappe (N1),
- une étape (E33) de dépôt de la deuxième nappe (N2) sur une deuxième face (61) de la toile tissée (6),
- une étape (E34) de consolidation d'un ensemble comprenant la première nappe (N1), la deuxième nappe (N2) et la toile tissée (6).

11. Procédé selon la revendication 10,
**caractérisé en ce que** la première série d'étapes (S1) comprend en outre :
- une étape (E13) de dépôt d'une deuxième pellicule en PEI (9) sur une deuxième face (10) de la couche en C/PEAK (2), ladite étape (E13) de dépôt précédant au moins l'étape (E14) de consolidation et de conformation et l'étape (E15) de perforation.

12. Procédé selon l'une quelconque des revendications 10 et 11,
**caractérisé en ce que** la deuxième série d'étapes (S2) comprend en outre :
- une étape (E22) d'approvisionnement d'une couche en C/PEAK (11),
- une étape (E23) de dépôt de la première couche en PEI (5) sur une première face (12) de la couche en C/PEAK (11), la première couche en PEI (5) de la deuxième nappe (N2) correspondant à une première pellicule en PEI,
- une étape (E24) de dépôt de l'ensemble comprenant la couche en C/PEAK (11) et la première pellicule en PEI (5) sur la toile tissée (6) de façon que la première pellicule en PEI (5) de la deuxième nappe (N2) fasse face à la toile tissée (6).

13. Procédé selon l'une quelconque des revendications 10 à 12,
**caractérisé en ce que** la deuxième série d'étape (S2) comprend en outre :
- une étape (E25) de dépôt d'une deuxième pellicule en PEI (13) sur une deuxième face (14) de la couche en C/PEAK (11) de la deuxième nappe (N2).

14. Procédé selon l'une quelconque des revendications 10 et 11,
**caractérisé en ce que** la première couche en PEI (5) de la deuxième nappe (N2) correspond à une couche en C/PEI.

15. Procédé selon l'une quelconque des revendications 10 et 11,
**caractérisé en ce que** la deuxième série d'étapes (S2) comprend en outre :
- une étape (E26) d'approvisionnement d'une couche en C/PEI (15),
- une étape (E27) de dépôt de la première couche en PEI (5) sur une première face (151) de la couche en C/PEI (15), la première couche en PEI (5) correspondant à une première pellicule en PEI,
- une étape (E28) de dépôt d'une deuxième pellicule en PEI (16) sur une deuxième face (152) de la couche en C/PEI (15).

16. Procédé de fabrication d'un panneau acoustique destiné à un aéronef, **caractérisé en ce qu'**il comporte les étapes suivantes :
- une étape (E100) d'assemblage d'une pluralité d'éléments de peau résistive (1) fabriquées selon l'une quelconque des revendications 10 à 15,
- une étape (E101) de dépôt d'au moins une bande (18) sur la deuxième nappe (N2),
- une étape (E102) de dépôt d'une couche d'adhésif (19) sur la bande (18),
- une étape (E103) de dépôt d'une couche en nid-d'abeilles (20) sur la couche d'adhésif (19),
- une étape (E104) de réticulation de la couche d'adhésif (19).
